# FASCICULE DE BREVET EUROPEEN

(11) **EP 1 617 068 B1**
(45) Date de publication et mention de la délivrance du brevet: **10.04.2013**
(21) Numéro de dépôt: 05291460.3
(22) Date de dépôt: 06.07.2005
(51) Int. Cl.: F02K 1/46, F02K 1/38

(54) **Capot de tuyère de turbomachine à motifs à réduction de bruits de jet**
Haube eines Strahltriebwerks mit Mitteln zur Schalldämpfung
Turbomachine cowl having noise suppression tabs

(30) Priorité: 13.07.2004 FR 0407792
(43) Date de publication de la demande: 18.01.2006
(73) Titulaire: SNECMA, 75015 Paris (FR)
(72) Inventeur: Goutines, Marius, 77000 Melun (FR); Julliard, Jacques, 77850 Hericy sur Seine (FR); Loheac, Pierre, 77170 Brie Comte Robert (FR); Miroudot, Frédéric, 94360 Brie Sur Marne (FR); Nogues, Jean-Michel, 77820 Chatelet en Brie (FR); Thomas, Stéphane, 77000 Melun (FR)
(74) Mandataire: Thévenet, Jean-Bruno

(56) Documents cités:
- EP-A- 0 984 152
- EP-A- 1 496 238
- US-A- 2 934 889
- US-A- 3 664 455
- US-A- 4 175 640
- US-A- 4 576 002

## Description

### Arrière-plan de l'invention

La présente invention se rapporte au domaine général des tuyères équipant les turbomachines. Elle vise plus particulièrement une tuyère à flux séparés dont au moins l'un des capots est muni de motifs destinés à réduire le bruit de jet engendré en sortie de la tuyère.

Les tuyères à flux séparés de turbomachine se composent généralement d'un capot primaire, d'un capot secondaire disposé concentriquement autour du capot primaire de façon à définir un premier canal annulaire pour l'écoulement d'un flux externe (ou flux froid), et d'un corps central disposé concentriquement à l'intérieur du capot primaire de façon à définir un second canal annulaire pour l'écoulement d'un flux interne (ou flux chaud).

L'une des solutions connues pour réduire le bruit de jet en sortie d'une telle tuyère est de favoriser le mélange entre les flux chaud et froid issus de la turbomachine. Toute la difficulté du problème réside dans le contrôle des caractéristiques du mélange à obtenir entre les flux chaud et froid, sachant qu'un mélange trop brutal a comme conséquence une augmentation indésirable des niveaux de turbulence dans le champ proche de l'éjection. Une telle augmentation influence de façon négative les réductions potentielles de bruit obtenues dans les zones de mélange plus éloignées. Ainsi, le mélange entre les flux doit donc être le plus efficace possible, tout en répondant à des contraintes et des critères d'efficacité aérodynamiques et acoustiques.

A cet effet, il est bien connu de munir l'un des capots de la tuyère d'une pluralité de motifs répétitifs répartis sur toute la circonférence du bord de fuite du capot. Par la mise en place de tels motifs sur le bord de fuite du capot de la tuyère, le mélange entre les flux s'effectue par la création de tourbillons (ou vortex) longitudinaux contrarotatifs.

Par exemple, la demande de brevet EP 0,913,567 prévoit de munir le bord de fuite du capot primaire de la tuyère d'une pluralité de motifs répétitifs de forme triangulaire (appelés chevrons) qui permettent de favoriser le mélange entre les flux chaud et froid. De même, la publication GB 2,355,766 propose de munir le bord de fuite des capots primaire et secondaire de la tuyère d'une pluralité de motifs répétitifs de forme trapézoïdale (appelés créneaux).

EP 1 496 238 décrit un capot muni d'ondulations alternant avec des échancrures et US 4,576,002 divulgue un capot muni d'une pluralité de lobes vrillés.

Bien que favorisant le mélange entre les flux, les motifs évoqués ci-dessus présentent cependant des inconvénients. En effet, une forme symétrique des motifs (tels que des triangles ou des créneaux) au bord de fuite d'au moins l'un des capots de la tuyère génère, au niveau de chaque motif, deux tourbillons (ou vortex) longitudinaux contrarotatifs d'intensité équivalente et relativement rapprochés l'un de l'autre. Sur toute la circonférence du capot de la tuyère, cela équivaut à une pluralité de paires de tourbillons qui se compensent entre elles. Il en résulte un mélange entre les flux peu efficace, notamment dans les zones les plus éloignées de l'éjection.

### Objet et résumé de l'invention

La présente invention a donc pour but principal de pallier de tels inconvénients en proposant un capot pour tuyère à flux séparés permettant de rendre plus efficace le mélange entre les flux froid et chaud de façon à réduire le bruit de jet en sortie de tuyère.

A cet effet, il est prévu un capot pour tuyère de turbomachine tel que défini par la revendication 1.

Au niveau de chaque motif, l'intensité des deux tourbillons générés étant différente, ces tourbillons ne se compensent plus sur toute la circonférence du capot. Il en résulte une mise en rotation globale de l'écoulement dans les zones les plus éloignées de l'éjection avec comme conséquence un mélange entre les flux plus efficace et une meilleure réduction du bruit de jet, notamment aux basses fréquences.

En outre, la dissymétrie des motifs permet de déstructurer le jet dans le champ proche de l'éjection, et donc de contribuer plus efficacement à la réduction du bruit de jet, notamment aux hautes fréquences.

La distance d'inclinaison de la première portion de chaque motif est de préférence supérieure à la distance d'inclinaison de la seconde portion de sorte que la pénétration dans le flux interne est plus importante que la pénétration dans le flux externe.

La distance d'inclinaison des première et seconde portions de chaque motif peut être comprise entre 5% et 30% de la distance respective sur laquelle s'étendent longitudinalement les première et seconde portions.

La première portion de chaque motif peut s'étendre longitudinalement sur une distance supérieure à la moitié de la distance circonférentielle séparant deux motifs adjacents. De même, la seconde portion de chaque motif peut s'étendre longitudinalement sur une distance inférieure à la moitié de la distance circonférentielle séparant deux motifs adjacents.

Les motifs peuvent être disposés sur le bord de fuite de l'un des capots de la tuyère, en respectant une symétrie par rapport à un plan vertical passant par un axe perpendiculaire à l'axe longitudinal de la tuyère.

Un intervalle du bord de fuite du capot peut être ménagé sans motif au niveau de la zone de raccordement dudit capot avec un pylône de support.

La présente invention a également pour objet une tuyère de turbomachine dont le capot primaire et/ou le capot secondaire est un capot tel que défini précédemment.

La présente invention a encore pour objet une turbomachine comportant une tuyère telle que définie précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective d'une tuyère de turbomachine équipée d'un capot selon un mode de réalisation de l'invention ;
- la figure 2 est une vue élargie d'un motif de réduction du bruit de jet équipant la tuyère de la figure 1 ;
- la figure 3 est une vue de face du motif de réduction de bruit de la figure 2 ;
- la figure 4 est une vue en perspective d'une tuyère de turbomachine équipée d'un capot selon un autre mode de réalisation de l'invention ; et
- la figure 5 est une vue de face d'une tuyère de turbomachine selon encore un autre mode de réalisation de l'invention.

### Description détaillée d'un mode de réalisation

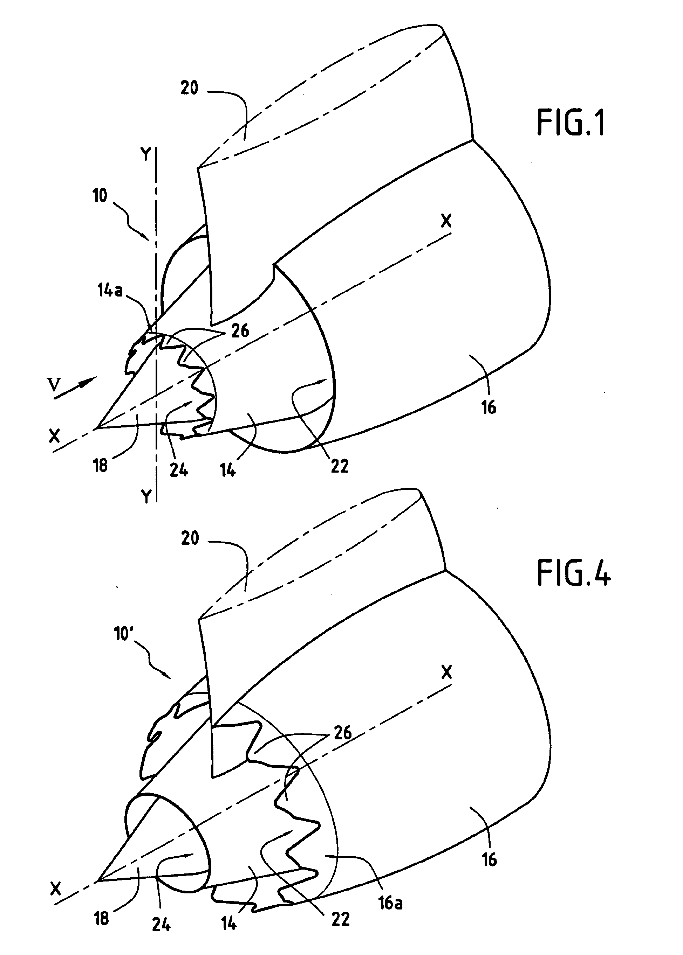

La figure 1 représente, en perspective, une tuyère 10 à flux séparés de turbomachine. La tuyère 10, de forme axisymétrique par rapport à son axe longitudinal X-X, est typiquement formée d'un capot primaire 14, d'un capot secondaire 16 et d'un corps central 18 centrés sur l'axe longitudinal X-X de la tuyère.

Le capot primaire 14, de forme sensiblement cylindrique ou tronconique, s'étend selon l'axe longitudinal X-X de la tuyère. Le corps central 18 est disposé concentriquement à l'intérieur du capot primaire 14 et se termine par une partie sensiblement conique.

Le capot secondaire 16, également de forme sensiblement cylindrique ou tronconique, entoure concentriquement le capot primaire 14 et s'étend selon l'axe longitudinal X-X de la tuyère.

On notera que l'axe longitudinal X-X de la tuyère est confondu avec l'axe longitudinal des capots primaire 14 et secondaire 16.

La tuyère à flux séparés ainsi définie est fixée sous une aile d'avion (non représentée sur les figures) par l'intermédiaire d'un pylône de support 20 s'appuyant sur le capot secondaire 16 de la tuyère et se prolongeant à l'intérieur du capot secondaire jusqu'au capot primaire 14.

L'assemblage concentrique des éléments de la tuyère 10 permet de définir : d'une part, entre les capot primaire 14 et secondaire 16, un premier canal annulaire 22 pour l'écoulement de l'air issu de la turbomachine (appelé aussi flux secondaire ou flux froid), et d'autre part, entre le capot primaire 14 et le corps central 18, un second canal annulaire 24 pour l'écoulement d'un flux gazeux interne issu de la turbomachine (appelé aussi flux primaire ou flux chaud).

Les flux gazeux interne et externe s'écoulant dans ces deux canaux annulaires 22, 24 se mélangent entre eux au niveau du bord de fuite 14a du capot primaire 14.

On notera que, sur la figure 1, le corps central 18 de la tuyère 10 est de type externe, c'est à dire que le corps central 18 s'étend longitudinalement au-delà du bord de fuite 14a du capot primaire 14.

Toutefois, l'invention peut également s'appliquer à une tuyère de type interne dans laquelle le bord de fuite du capot primaire s'étend longitudinalement au-delà du corps central de façon à recouvrir complètement ce dernier.

Au moins l'un des capots 14, 16 de la tuyère 10 (sur la figure 1, il s'agit du capot primaire 14) comporte une pluralité de motifs 26 répétitifs qui sont destinés à réduire le bruit de jet en sortie de la tuyère. Ces motifs 26 sont disposés de façon circonférentielle sur le bord de fuite 14a du capot primaire 14.

Selon l'invention, chaque motif 26 est dissymétrique par rapport à un plan médian P du motif passant par l'axe longitudinal X-X. De plus, chaque motif 26 comporte une première portion 26a inclinée radialement vers l'intérieur du capot primaire 14 et une seconde portion 26b inclinée radialement vers l'extérieur du capot primaire 14.

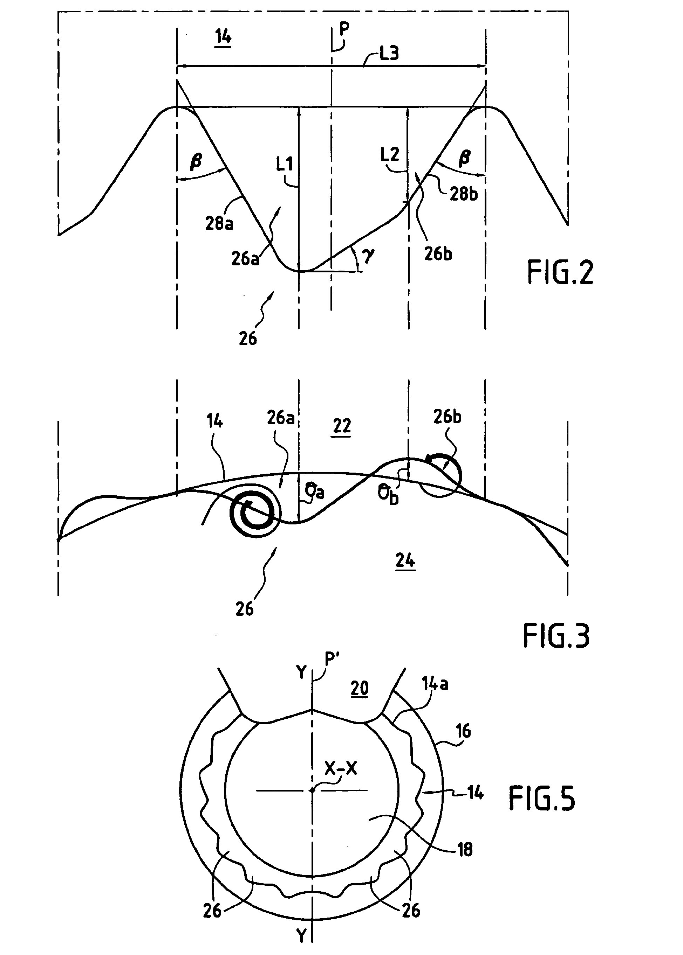

Ces deux caractéristiques particulières des motifs 26 de réduction du bruit de jet selon l'invention sont représentées sur les figures 2 et 3.

Notamment, le plan P représenté sur la figure 2 correspond au plan médian du motif 26 de réduction de bruit de jet, ce plan P passant par l'axe longitudinal X-X (non représenté sur cette figure). Par rapport à ce plan P, la forme du motif 26 est dissymétrique.

Le plan médian P divise le motif 26 en deux portions : une première portion 26a qui est inclinée radialement vers l'intérieur du capot primaire 14 (c'est-à-dire dans le flux interne), et une seconde portion qui est inclinée radialement vers l'extérieur du capot 14 (c'est-à-dire dans le flux externe).

De façon schématique, le motif 26 se présente sous la forme générale d'un quadrilatère, ayant de préférence une forme d'aileron, dont la base est commune avec le capot 14. Les côtés 28a, 28b de ce motif 26 quadrilatère forment chacun un angle β compris entre 15° et 45° avec l'axe longitudinal X-X. De préférence, cet angle β est d'environ 30°.

Par ailleurs, comme illustré sur la figure 2, le quadrilatère formant le motif 26 présente des angles arrondis afin d'éviter de générer un mélange trop brutal entre les flux froid et chaud.

Selon une caractéristique avantageuse de l'invention, la première portion 26a de chaque motif 26 s'étend longitudinalement sur une distance L1 supérieure à la distance L2 sur laquelle s'étend longitudinalement la seconde portion 26b du motif. De la sorte, la pénétration du motif 26 dans le flux interne peut être plus importante que sa pénétration dans le flux externe.

Dans une telle configuration, le côté du quadrilatère formant le motif 26 qui est opposé à la base forme un angle y compris par exemple entre 15° et 45° avec un axe perpendiculaire à l'axe longitudinal X-X. De préférence, cet angle y est d'environ 30°.

Par ailleurs, la première portion 26a de chaque motif 26 s'étend longitudinalement sur une distance L1 qui est de préférence supérieure à la moitié de la distance circonférentielle L3 séparant deux motifs adjacents. La distance L3 correspond à la longueur de la base du quadrilatère formant le motif. Par exemple, la distance L1 peut ainsi être égale à environ 0,6 fois la distance L3.

De même, la seconde portion 26b de chaque motif 26 s'étend longitudinalement sur une distance L2 qui est de préférence inférieure à moitié de la distance L3 circonférentielle séparant deux motifs adjacents. A titre d'exemple, la distance L2 peut ainsi être égale à environ 0,3 fois la distance L3.

Les inclinaisons radiales respectives des première et seconde portions 26a, 26b des motifs 26 à réduction du bruit de jet sont illustrées sur la figure 3.

Sur cette figure, l'extrémité de la première portion 26a du motif est inclinée radialement vers l'intérieur du capot 14, c'est-à-dire vers le canal 24 d'écoulement du flux interne, d'une distance d'inclinaison θa. Quant à l'extrémité de la seconde portion 26b du motif, elle est inclinée radialement vers l'extérieur du capot 14, c'est-à-dire vers le canal 22 d'écoulement du flux externe, d'une distance d'inclinaison θb.

Selon une autre caractéristique avantageuse de l'invention, la distance de pénétration interne θa de la première portion 26a de chaque motif 26 à réduction du bruit de jet est supérieure à la distance de pénétration externe θb de la seconde portion 26b du motif. De la sorte, la pénétration du motif 26 dans le flux interne peut être plus importante que sa pénétration dans le flux externe.

A titre indicatif, la distance de pénétration interne θa de la première portion 26a du motif peut représenter entre 5% et 20% de la distance longitudinale L1 sur laquelle s'étend cette portion du motif. De même, toujours à titre d'exemple, la distance de pénétration externe θb de la seconde portion 26b du motif peut correspondre entre 3% et 15% de la distance longitudinale L2 sur laquelle s'étend cette seconde portion.

Toujours sur la figure 3, on remarque bien que la géométrie particulière des motifs 26 à réduction du bruit de la tuyère selon l'invention génère, au niveau de chaque motif, deux vortex (ou tourbillons) longitudinaux, contrarotatifs et d'intensités différentes. Les intensités de ces deux vortex ne se compensent donc pas.

Sur l'ensemble du capot muni à son bord de fuite de ces motifs à réduction de bruit, il en résulte une mise en rotation globale de l'écoulement dans les zones plus éloignées de l'éjection qui est favorable à un mélange plus efficace entre les flux interne et externe.

La figure 4 représente une tuyère 10' de turbomachine selon un autre mode de réalisation de l'invention.

Par rapport au mode de réalisation, les motifs 26 à réduction du bruit de jet de cette tuyère 10' sont disposés, non pas sur le capot primaire 14, mais sur le bord de fuite 16a du capot secondaire 16.

Dans cette configuration, les motifs 26 permettent de favoriser le mélange entre, d'une part le flux gazeux froid s'écoulant dans le premier canal 22 délimité par les capots primaire 14 et secondaire 16 de la tuyère 10', et d'autre part le flux d'air s'écoulant le long de la paroi externe du capot secondaire 16.

La forme et la disposition particulière de ces motifs 26 à réduction du bruit de jet sont en tout point identiques à celles de la description faite en relation avec les figures 1 à 3.

Sur la figure 4, on remarquera que les motifs 26 à réduction du bruit de jet ne sont pas disposés sur toute la circonférence du bord de fuite du capot secondaire. En effet, un intervalle sans motif est ménagé au niveau de la zone de raccordement de la tuyère 10' avec le pylône de support 20 afin de permettre la fixation de ce dernier.

Selon encore un autre mode de réalisation de l'invention représenté sur la figure 5, les motifs 26 à réduction de bruit peuvent être disposés sur le bord de fuite de l'un des capots de la tuyère (il s'agit du capot primaire 14 sur la figure 5), en respectant une symétrie par rapport à un plan vertical P' passant par un axe Y-Y perpendiculaire à l'axe longitudinal X-X. Le plan de symétrie P' est délimité sur la partie supérieure du capot par le pylône de support 20 et sur la partie inférieure par une forme particulière du motif 26, cette forme pouvant par exemple être le résultat de l'assemblage de deux demi ailerons.

Selon encore un autre mode de réalisation de l'invention (non représenté sur les figures), les motifs à réduction du bruit de jet peuvent être aménagés à la fois sur la capot primaire et sur le capot secondaire de la tuyère.

De manière générale, on notera que la forme et le nombre des motifs à réduction du bruit de jet aménagés sur la circonférence du bord de fuite du capot (qu'il soit primaire ou secondaire) peuvent varier. En particulier, la position angulaire de leur dissymétrie par rapport à leur plan médian P, les longueurs L1 et L2 caractéristiques de leurs deux portions, ainsi que le taux de pénétration dans les flux interne et externe peuvent être différents suivant les applications.

## Revendications

1. Capot (14, 16) pour tuyère de turbomachine comportant une pluralité de motifs (26) répétitifs disposés de façon circonférentielle sur un bord de fuite (14a, 16a), les motifs (26) se présentant sous la forme d'ailerons, **caractérisé en ce que** chaque motif (26) est dissymétrique par rapport à un plan médian (P) du motif passant par un axe longitudinal (X-X) dudit capot (14, 16), **en ce que** chaque motif comporte une première portion (26a) inclinée radialement vers l'intérieur du capot (14, 16) et une seconde portion (26b) inclinée radialement vers l'extérieur du capot (14, 16) et **en ce que** la première portion (26a) de chaque motif (26) s'étend longitudinalement sur une distance (L1) supérieure à la distance (L2) sur laquelle s'étend longitudinalement la seconde portion (26b) dudit motif.

2. Capot selon la revendication 1, **caractérisé en ce que** la distance d'inclinaison (θa) de la première portion (26a) de chaque motif (26) est supérieure à la distance d'inclinaison (θb) de la seconde portion (26b) dudit motif.

3. Capot selon l'une des revendications 1 et 2, **caractérisé en ce que** la distance d'inclinaison (θa, θb) des première et seconde portions (26a, 26b) de chaque motif (26) est comprise entre 5% et 30% de la distance respective (L1, L2) sur laquelle s'étendent longitudinalement lesdites portions.

4. Capot selon l'une quelconque des revendications 1 à 3, **caractérisé en ce que** la première portion (26a) de chaque motif (26) s'étend longitudinalement sur une distance (L1) supérieure à la moitié de la distance circonférentielle (L3) séparant deux motifs (26) adjacents et **en ce que** la seconde portion (26b) de chaque motif (26) s'étend longitudinalement sur une distance (L2) inférieure à la moitié de ladite distance circonférentielle (L3) séparant deux motifs adjacents.

5. Capot selon l'une quelconque des revendications 1 à 4, **caractérisé en ce que** les motifs (26) sont disposés de façon symétrique par rapport à un plan (P') passant par un axe (Y-Y) perpendiculaire à l'axe longitudinal (X-X) du capot.

6. Capot selon l'une quelconque des revendications 1 à 5, **caractérisé en ce qu'**un intervalle du bord de fuite (14a, 16a) du capot (14, 16) est ménagé sans motif au niveau de la zone de raccordement dudit capot avec un pylône de support (20).

7. Capot selon quelconque des revendications 1 à 6, **caractérisé en ce que** les motifs (26) se présentent chacun sous la forme d'un quadrilatère dont la base est commune avec ledit capot.

8. Tuyère (10, 10') de turbomachine, comportant un capot primaire (14) disposé selon un axe longitudinal (X-X) de la tuyère et un capot secondaire (16) disposé concentriquement autour du capot primaire (14), **caractérisée en ce que** le capot primaire (14) est un capot selon l'une quelconque des revendications 1 à 7.

9. Tuyère (10, 10') de turbomachine, comportant un capot primaire (14) disposé selon un axe longitudinal (X-X) de la tuyère et un capot secondaire (16) disposé concentriquement autour du capot primaire (14), **caractérisée en ce que** le capot secondaire (16) est un capot selon l'une quelconque des revendications 1 à 7.

10. Tuyère (10, 10') de turbomachine, comportant un capot primaire (14) disposé selon un axe longitudinal (X-X) de la tuyère et un capot secondaire (16) disposé concentriquement autour du capot primaire (14), **caractérisée en ce que** les capots primaire (14) et secondaire (16) sont des capots selon l'une quelconque des revendications 1 à 7.

11. Turbomachine comportant une tuyère (10, 10') selon l'une quelconque des revendications 9 à 10.

## Claims

1. A cowl (14, 16) for a turbomachine nozzle, the cowl having a plurality of repeated patterns (26) disposed circumferentially at a trailing edge (14a, 16a), the patterns (26) being fin-shaped, **characterized in that** each pattern (26) is asymmetrical about a midplane (P) of the pattern containing a longitudinal axis (X-X) of said cowl (14, 16), **in that** each pattern comprises a first portion (26a) inclined radially towards the inside of the cowl (14, 16) and a second portion (26b) inclined radially towards the outside of the cowl (14, 16), and **in that** the first portion (26a) of each pattern (26) extends longitudinally over a distance (L1) that is greater than the distance (L2) over which the second portion (26b) of said pattern extends.

2. A cowl according to claim 1, **characterized in that** the inclination distance (θₐ) of the first portion (26a) of each pattern (26) is greater than the inclination distance (θ_{b}) of the second portion (26b) of said pattern.

3. A cowl according to claim 1 or claim 2, **characterized in that** the inclination distances (θₐ, θ_{b}) of the first and second portions (26a, 26b) of each pattern (26) lies in the range 5% to 30% of the respective distance (L1, L2) over which each of said portions extends longitudinally.

4. A cowl according to any one of claims 1 to 3, **characterized in that** the first portion (26a) of each pattern (26) extends longitudinally over a distance (L1) greater than half the circumferential distance (L3) occupied by a pattern (26), and **in that** the second portion (26b) of each pattern (26) extends longitudinally over a distance (L2) that is less than half said circumferential distance (L3) occupied by a pattern.

5. A cowl according to any one of claims 1 to 4, **characterized in that** the patterns (26) are disposed symmetrically about a plane (P') containing an axis (Y-Y) perpendicular to the longitudinal axis (X-X) of the cowl.

6. A cowl according to any one of claims 1 to 5, **characterized in that** a gap is provided in the trailing edge (14a, 16a) of the cowl (14, 16) having no pattern in the vicinity of the zone where said cowl is connected to a support pylon (20).

7. A cowl according to any one of claims 1 to 6, **characterized in that** the patterns (26) are each in the shape of a quadrilateral with its base being common with said cowl.

8. A turbomachine nozzle (10, 10') including a primary cowl (14) disposed about a longitudinal axis (X-X) of the nozzle, and a secondary cowl (16) disposed concentrically around the primary cowl (14), the nozzle being **characterized in that** the primary cowl (14) is a cowl according to any one of claims 1 to 7.

9. A turbomachine nozzle (10, 10') including a primary cowl (14) disposed about a longitudinal axis (X-X) of the nozzle, and a secondary cowl (16) disposed concentrically around the primary cowl (14), the nozzle being **characterized in that** the secondary cowl (16) is a cowl according to any one of claims 1 to 7.

10. A turbomachine nozzle (10, 10') including a primary cowl (14) disposed about a longitudinal axis (X-X) of the nozzle, and a secondary cowl (16) disposed concentrically around the primary cowl (14), the nozzle being **characterized in that** the primary and secondary cowls (14, 16) are cowls according to any one of claims 1 to 7.

11. A turbomachine including a nozzle (10, 10') according to any one of claims 9 to 10.

## Patentansprüche

1. Verkleidung (14, 16) für eine Düse einer Turbomaschine, umfassend eine Vielzahl von sich wiederholenden Mustern (26), die an einer Austrittskante (14a, 16a) umlaufend angeordnet sind, wobei die Muster (26) in Form von Flügelspitzen vorliegen, **dadurch gekennzeichnet, daß** jedes Muster (26) in bezug auf eine durch eine Längsachse (X-X) der Verkleidung (14, 16) verlaufende Mittelebene (P) des Musters asymmetrisch ist, daß jedes Muster einen ersten Abschnitt (26a), der radial zur Innenseite der Verkleidung (14, 16) geneigt ist, und einen zweiten Abschnitt (26b), der radial zur Außenseite der Verkleidung (14, 16) geneigt ist, umfaßt und daß der erste Abschnitt (26a) eines jeden Musters (26) sich in Längsrichtung über eine Strecke (L1) erstreckt, die größer als die Strecke (L2) ist, über die sich der zweite Abschnitt (26b) des Musters in Längsrichtung erstreckt.

2. Verkleidung nach Anspruch 1, **dadurch gekennzeichnet, daß** der Neigungsabstand (θa) des ersten Abschnitts (26a) eines jeden Musters (26) größer ist als der Neigungsabstand (θb) des zweiten Abschnitts (26b) des Musters

3. Verkleidung nach einem der Ansprüche 1 und 2, **dadurch gekennzeichnet, daß** der Neigungsabstand (θa, θb) des ersten und des zweiten Abschnitts (26a, 26b) eines jeden Musters (26) zwischen 5 % und 30 % der jeweiligen Strecke (L1, L2) beträgt, über die sich die Abschnitte in Längsrichtung erstrecken.

4. Verkleidung nach einem der Ansprüche 1 bis 3, **dadurch gekennzeichnet, daß** der erste Abschnitt (26a) eines jeden Musters (26) sich in Längsrichtung über eine Strecke (L1) erstreckt, die größer als die Hälfte des zwei benachbarte Muster (26) trennenden Umfangsabstandes (L3) ist, und daß der zweite Abschnitt (26b) eines jeden Musters (26) sich in Längsrichtung über eine Strecke (L2) erstreckt, die kleiner als die Hälfte des zwei benachbarte Muster trennenden Umfangsabstandes (L3) ist.

5. Verkleidung nach einem der Ansprüche 1 bis 4, **dadurch gekennzeichnet, daß** die Muster (26) in bezug auf eine Ebene (P'), die durch eine zur Längsachse (X-X) der Verkleidung senkrechte Achse (Y-Y) verläuft, symmetrisch angeordnet sind.

6. Verkleidung nach einem der Ansprüche 1 bis 5, **dadurch gekennzeichnet, daß** ein Bereich der Austrittskante (14a, 16a) der Verkleidung (14, 16) in Höhe des Verbindungsbereichs der Verkleidung mit einem Tragmast (20) ohne Muster ausgespart ist.

7. Verkleidung nach einem der Ansprüche 1 bis 6, **dadurch gekennzeichnet, daß** die Muster (26) jeweils in Form eines Vierecks vorliegen, dessen Basis mit der Verkleidung gemein ist.

8. Düse (10, 10') einer Turbomaschine, umfassend eine primäre Verkleidung (14), welche entlang einer Längsachse (X-X) der Düse angeordnet ist, sowie eine sekundäre Verkleidung (16), die um die primäre Verkleidung (14) herum konzentrisch angeordnet ist, **dadurch gekennzeichnet, daß** die primäre Verkleidung (14) eine Verkleidung nach einem der Ansprüche 1 bis 7 ist.

9. Düse (10, 10') einer Turbomaschine, umfassend eine primäre Verkleidung (14), welche entlang einer Längsachse (X-X) der Düse angeordnet ist, sowie eine sekundäre Verkleidung (16), die um die primäre Verkleidung (14) herum konzentrisch angeordnet ist, **dadurch gekennzeichnet, daß** die sekundäre Verkleidung (16) eine Verkleidung nach einem der Ansprüche 1 bis 7 ist.

10. Düse (10, 10') einer Turbomaschine, umfassend eine primäre Verkleidung (14), welche entlang einer Längsachse (X-X) der Düse angeordnet ist, sowie eine sekundäre Verkleidung (16), die um die primäre Verkleidung (14) herum konzentrisch angeordnet ist, **dadurch gekennzeichnet, daß** die primäre Verkleidung (14) und die sekundäre Verkleidung (16) Verkleidungen nach einem der Ansprüche 1 bis 7 sind.

11. Turbomaschine, die eine Düse (10, 10') nach einem der Ansprüche 8 bis 10 umfaßt.
